# EUROPÄISCHE PATENTSCHRIFT

(11) **EP 0 438 643 B1**
(45) Veröffentlichungstag und Bekanntmachung des Hinweises auf die Patenterteilung: **01.06.1994**
(21) Anmeldenummer: 90120166.5
(22) Anmeldetag: 20.10.1990
(51) Int. Cl.: F16H 61/02

(54) **Verfahren zum Ermitteln eines Schaltsignals aus einem Schaltkennfeld**
Method for generating a shift signal from a shiftmap
Procédé pour générer un signal de changement de vitesse à partir d'un réseau de courbes de changement de vitesse

(30) Priorität: 26.01.1990 DE 4002325
(43) Veröffentlichungstag der Anmeldung: 31.07.1991
(60) Teilanmeldung: 93113886.1
(73) Patentinhaber: Bayerische Motoren Werke Aktiengesellschaft, 80788 München (DE)
(72) Erfinder: Welter, Andreas, W-8000 München 2 (DE); Werner, Jürgen, W-8046 Garching (DE); Stephan, Anton, W-8011 Baldham (DE)

(56) Entgegenhaltungen:
- EP-A- 0 000 960
- EP-A- 0 038 083
- EP-A- 0 144 608
- DE-A- 2 811 574

## Beschreibung

Die Erfindung bezieht sich auf Verfahren zum Ermitteln eines Schaltsignals aus einem Schaltkennfeld eines über eine elektronische Getriebesteuereinheit gesteuertes Automatikgetriebe in einem Kraftfahrzeug nach dem Oberbegriff der Ansprüche 1 und 2.

Automatikgetriebe in Kraftfahrzeugen werden immer mehr elektronisch gesteuert. Dabei ist das Schaltkennfeld in der elektronischen Steuereinheit abgespeichert. Wie dies realisiert sein kann, zeigt die DE-A-2811574. Je nach Betriebspunkt gibt die Steuereinheit an die einzelnen Schaltventile den Befehl zum Hoch- oder Rückschalten. Das Schaltkennfeld enthält hierzu für jeden Gangwechsel eine Hochschaltkennlinie und ebenso eine Rückschaltkennlinie. Die Schaltkennlinien sind dabei als Funktion der Fahrzeuggeschwindigkeit und der Stellung der Drosselklappe bzw. des Öffnungswinkels dargestellt. Sensoren tasten laufend diese Größen ab und geben entsprechende Signale an die Steuereinheit. Da in vielen Fällen das Fahrpedal mechanisch mit der Drosselklappe verbunden ist, kann der Öffnungswinkel der Drosselklappe auch durch die Stellung des Fahrpedals ermittelt werden.

Ebenfalls aus der DE-A-28 11 574 kann beispielhaft entnommen werden, wie ein der Stellung des Fahrpedals proportionales Fahrpedalsignal abgetastet und der Steuerelektronik zugeführt wird.

Durch die beschriebene Art der Getriebesteuerung ist nicht in jeder Fahrsituation das richtige Schaltmanöver sichergestellt. Insbesondere das Hochschalten im Schubbetrieb macht sich bei sportlicher Fahrweise sehr störend bemerkbar. Dies sei anhand der Zeichnung erklärt.

Die einzige Figur der Zeichnung zeigt ein Schaltkennfeld mit den einzelnen Schaltkennlinien. Auf der Abszisse ist die ansteigende Fahrgeschwindigkeit, mit v bezeichnet, abgetragen und auf der Ordinate der größer werdende Öffnungswinkel β der Drosselklappe der Brennkraftmaschine. Dabei soll das Fahrpedal - und dies gilt für die ganze nachfolgende Beschreibung - mechanisch mit der Drosselklappe der Brennkraftmaschine verbunden sein. Der Winkeländerung des Fahrpedals folgt proportional eine Änderung des Öffnungswinkels der Drosselklappe. Steigendes β bedeutet, daß die Drosselklappe immer mehr öffnet, was gleichbedeutend ist mit einem immer stärkeren Niederdrücken des Fahrpedals.

Das Kennfeld zeigt zwei Arten von Schaltkennlinien, nämlich die mit ausgezogenem Strich dargestellten Kennlinien 1, 2, 3 und 4. Es sind die Hochschaltkennlinien. Dabei repräsentiert beispielsweise die Schaltkennlinie 1 das Hochschalten vom ersten in den zweiten Gang. Entsprechend ist die Schaltkennlinie 4 für das Hochschalten vom vierten in den fünften Gang vorgesehen. Daneben sind Schaltkennlinien gestrichelt dargestellt und mit 1', 2', 3' und 4' bezeichnet. Diese Schaltkennlinien repräsentieren die Rückschaltkennlinien. Sie sind nur der Vollständigkeit halber erwähnt, zu der vorliegenden Erfindung haben sie im wesentlichen keinen Bezug.

Stellvertretend für die anderen Hochschaltkennlinien soll der Verlauf der Hochschaltkennlinie 4 beschrieben werden. Ausgehend von einem großen β, also von einer offenen Drosselklappe, fällt die Hochschaltkennlinie 4 zunächst senkrecht nach unten. Bei etwa halbgeschlossener Drosselklappe geht sie in einen schräg nach unten, in Richtung kleiner werdendem v zeigenden Kurvenabschnitt 4d über. Daran schließt sich wieder ein senkrecht abfallender kurzer Kurvenast 4e an, der in einen strichpunktiert dargestellten Kennlinienast 4a übergeht. Der Kennlinienast 4a deutet dabei den Verlauf der Hochschaltkennlinie in einem herkömmlichen Schaltkennfeld an.

Das Phänomen des Hochschaltens beim Schubbetrieb soll nun im Bereich dieser Hochschaltkennlinie erläutert werden. Angenommen, das Fahrzeug fährt mit einer bestimmten Geschwindigkeit und die Drosselklappe ist nahezu geöffnet. Dies soll im Kennlinienfeld einem Betriebspunkt A entsprechen. Fährt das Fahrzeug nun beispielsweise auf eine Kurve zu, und möchte der Fahrer die Geschwindigkeit erringern, so wird er zunächst einmal seinen Fuß vom Fahrpedal nehmen. Damit schwenkt das Fahrpedal zurück und mit ihm macht die Drosselklappe zu, das heißt der Öffnungswinkel β wird schnell kleiner. Da aber das Fahrzeug im ersten Augenblick nicht an Geschwindigkeit verliert, wandert der Betriebspunkt von A in etwa senkrecht nach unten in Richtung B. Er kreuzt dabei an der Stelle C die Hochschaltkennlinie 4, was bei der herkömmlichen Getriebesteuerung für die elektronische Steuereinheit bedeutet, einen entsprechenden Hochschaltbefehl abzugeben. Das Getriebe schaltet also in den fünften Gang. Die Motordrehzahl fällt dadurch ab und als Folge tritt wenigstens anfänglich eine unerwünschte Bremswirkung des Motors auf.

Möchte der Fahrer nach Durchfahren der Kurven wieder beschleunigen und drückt dabei das Fahrpedal durch, so muß das Getriebe zunächst einmal wieder vom fünften in den vierten und möglicherweise sogar in den dritten Gang zurückschalten. Erst nach diesen Schaltvorgängen ist wieder die gewünschte Motorleistung verfügbar. Da das Zurückschalten Zeit in Anspruch nimmt, kann dies, wie erwähnt, störend empfunden werden. Außerdem schaltet das Getriebe viel häufiger als notwendig wäre.

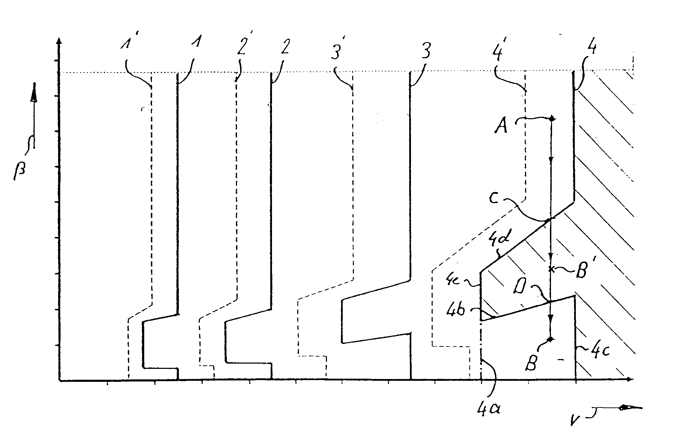

Die EP-A-0 038 083 zeigt in ihrer Figur 11b ein Schaltkennlinienfeld, bei dem die Schaltkennlinien eine Ausprägung in Richtung niedriger Geschwindigkeit haben.

Aufgabe der Erfindung ist es, unter Zugrundelegung eines derartigen Schaltkennlinienverlaufs nach der EP-A-0 038 083 das Hochschalten im Schubbetrieb zu unterdrücken.

Die Erfindung geht also von einem Schaltkennlinienfeld aus, bei dem die Hochschaltkennlinien in ihrem Verlauf eine in Richtung niedriger Geschwindigkeit vorspringende Ausprägung aufweisen, die bei den herkömmlichen Kennlinien nicht gegeben ist. Fällt der Betriebspunkt durch Loslassen des Fahrpedals nach unten, kann er die Hochschaltkennlinie zweimal schneiden. Daraus läßt sich die Information ableiten, ob der Fahrer einen höheren Gang einlegen oder die Geschwindigkeit verringern möchte. Es liegt dabei die Überlegung zugrunde, daß der Fahrer tatsächlich die Geschwindigkeit seines Fahrzeugs verringern möchte, wenn der Betriebspunkt aus dem Meßbereich der Hochschaltkennlinie schon nach kurzer, vorgegebener Zeit nach unten wieder austritt. Der Fahrer hat das Gaspedal schnell losgelassen. Verharrt der Betriebspunkt allerdings länger als eine vorgegebene Zeit im Meßbereich der Kennlinie, wird dies in der Weise gedeutet, daß der Fahrer auf eine sparsame Fahrweise durch Hochschalten übergehen möchte. Er wird tatsächlich das Gaspedal nur ein wenig zurücknehmen. Nach den Kennzeichen der Ansprüche 1 und 2 kann die Ermittlung des Schaltsignals auf verschiedene Weise erfolgen.

Nach der Lösung nach Anspruch 1 wird der Zeitpunkt beim ersten Überschreiten der Hochschaltkennlinie erfaßt. In der Getriebesteuereinheit wird eine Zeitspanne vorgegeben. Hat der Betriebspunkt am Ende der Zeitspanne die Hochschaltkennlinie bereits ein zweites Mal geschnitten, so wird in der Getriebesteuereinheit kein Hochschaltsignal abgegeben.

Bei der kennzeichnenden Lösung nach Anspruch 2 wird das der Stellung des Fahrpedals proportionale Fahrpedalsignal laufend gemessen und der Getriebesteuereinheit zugeführt. Dort wird das Fahrpedalsignal in einen Meßwert umgewandelt, der die Fahrpedalgeschwindigkeit wiedergibt. Überschreitet der Betriebspunkt eine Hochschaltkennlinie, so wird anhand der aktuellen Gaspedalgeschwindigkeit extrapoliert, wann der Betriebspunkt die Hochschaltkennlinie das nächste Mal überschreiten wird. Aufgrund des abgespeicherten Kennlinienfeldes kann in der Getriebesteuereinheit die Extrapolation in allgemein bekannter, dem Fachmann gängiger Weise durchgeführt werden. Liegt der Zeitpunkt des zweiten Überschreitens der Kennlinie innerhalb eines vorgegebenen Zeitraumes, so wird die Schaltung unterdrückt. Die Abschätzung des unteren Schnittpunktes von der augenblicklichen Lage des Betriebspunktes wird so lange wiederholt, bis die Hochschaltkennlinie tatsächlich erneut überschritten wird oder der berechnete Zeitpunkt außerhalb des vorgegebenen Zeitraumes liegt.

Auch hier wird die Art und Weise des Überschreitens der Hochschaltkennlinien als Wunsch des Fahrers entsprechend dem Vorhergesagten interpretiert.

In einer bevorzugten Ausführung wird die Hochschaltung unterdrückt, wenn die Querbeschleunigung des Fahrzeuges einen vorgegebenen Grenzwert überschreitet. Zur Bestimmung der Querbeschleunigung kann, außer einem Querbeschleunigungssensor, ein Algorithmus dienen, der aus dem Lenkwinkel und der Fahrzeuggeschwindigkeit die Querbeschleunigung berechnet.

In einer weiteren zweckmäßigen Ausführung wird allein der Lenkwinkel mitberücksichtigt. Es sollen damit solche Fälle abgedeckt werden, wo beispielsweise der Fahrer die Autobahn verläßt und in die engen Kurve einer Autobahnausfahrt einfährt. In diesem Fall wäre ein Hochschalten des Getriebes ebenfalls unsinnig.

Nachfolgend soll anhand der erwähnten Zeichnung mit der einzigen Figur die Wirkungsweise des erfindungsgemäßen Verfahrens noch einmal verdeutlicht werden.

Nach dieser Figur ist die Hochschaltkennlinie 4 - wie auch die Kennlinien 1, 2 und 3 - nicht mehr im unteren Bereich in der Weise fortgeführt, wie dies der Kennlinienast 4a zeigt. Vielmehr kehrt sie ihre Richtung um und verläuft mit einem Kennlinienast 4b in Richtung steigendem v, um dann wieder in einen senkrechten Kurvenabschnitt 4c überzugehen. Durch die Kennlinienäste 4d, 4e und 4b bildet sich eine Ausprägung aus, die in Richtung kleiner werdendem v zeigt. Die Fläche der so von der Hochschaltkennlinie 4 umschlossene Ausprägung dient, wie nachfolgend näher erläutert, als Meßabschnitt.

Für die weiteren Erklärungen soll wiederum nur die Hochschaltkennlinie 4 herangezogen werden, für die übrigen Hochschaltkennlinien gilt ähnliches.

Befindet sich nun das Fahrzeug im Betriebspunkt A und wird das Gaspedal losgelassen wird, so fällt der Betriebspunkt entsprechend den Pfeilen nach unten in Richtung B. Schneidet er die Hochschaltkennlinie 4 im Punkt C des Kurvenastes 4d und tritt er damit in den Meßabschnitt ein, wird in einer nicht dargestellten elektronischen Steuereinheit die aktuelle Fahrpedalgeschwindigkeit ermittelt. Basierend auf diesem Wert wird der Zeitpunkt extrapoliert, zu dem der Betriebspunkt das nächste Mal im Bereich des Kurvenastes 4b die Hochschaltkennlinie überschreitet, das heißt den schraffierten Meßabschnitt verläßt (Punkt D). Liegt dieser Zeitpunkt außerhalb eines vorgegebenen Zeitraumes - der beispielsweise drei Sekunden sein kann -, so wird davon ausgegangen, daß der Fahrer einen Betriebspunkt im schraffierten Bereich anstrebt (z. B. Punkt B'). Er möchte demnach mit annähernd konstanter Geschwindigkeit weiterfahren. Falls die Querbeschleunigung mitberücksichtigt wird, wird die Hochschaltung unter diesen Umständen durchgeführt, soweit die Querbeschleunigung unterhalb eines vorgegebenen Grenzwertes liegt.

Liegt der ermittelte Wert innerhalb des vorgegebenen Zeitraumes, wird der ganze Vorgang wiederholt. Allerdings wird dann von der augenblicklichen Lage des Betriebspunktes im Meßabschnitt ausgegangen. Es wird wieder die aktuelle Fahrpedalgeschwindigkeit ermittelt, die Extrapolation für den Austritt durchgeführt und der Wert mit dem vorgegebenen Zeitraum verglichen. Dieser Vorgang wiederholt sich sooft, bis entweder der Betriebspunkt aus dem Meßbereich tatsächlich ausgetreten ist oder der durch die Extrapolation ermittelte Wert außerhalb des vorgegebenen Zeitraumes liegt.

Bei der Extrapolation wird in der Weise vorgegangen, daß man zunächst, wie gesagt, die Fahrpedalgeschwindigkeit ermittelt. Da die Geschwindigkeit einen Vektor darstellt, kann durch dessen Richtung die Austrittsstelle aus dem Meßbereich ermittelt werden, beispielsweise Punkt D. Der Abstand zwischen der aktuellen Lage des Betriebspunktes und der Austrittswelle - beispielsweise zwischen C und D - läßt sich damit in der Steuereinheit ebenfalls errechnen. Durch einfache Division dieses Abstandes durch die ermittelte Gaspedalgeschwindigkeit ergibt sich eine Zeit, die mit dem vorgegebenen Zeitraum verglichen wird.

Es sei der Vollständigkeit hier noch erwähnt, daß natürlich auch der Fall auftreten kann, bei dem der Betriebspunkt nicht oberhalb der vorspringenden Ausprägung der Hochschaltkennlinie 4 liegt, sondern etwas weiter nach links in Richtung kleinerer Geschwindigkeit versetzt ist. Hierauf geht jedoch die Erfindung nicht ein, da ein fallender Betriebspunkt in diesem Fall die Hochschaltkennlinie nicht schneiden und damit die Getriebesteuerung auch keinen Hochschaltbefehl an das Getriebe abgeben würde.

## Patentansprüche

1. Verfahren zum Ermitteln eines Schaltsignals für ein über eine elektronische Getriebesteuereinheit gesteuertes Automatikgetriebe in einem mit einer Brennkraftmaschine angetriebenen Kraftfahrzeug, bei dem in einem Schaltkennfeld Hochschaltkennlinien (1, 2, 3, 4) als Kurven eines Fahrzeuggeschwindigkeit-Drosselklappenstellung-Diagramm dargestellt sind, wobei die Hochschaltkennlinien (1, 2, 3, 4) im Bereich niedrigerer Öffnungswinkel (β) der Drosselklappe einen in Richtung geringerer Fahrzeuggeschwindigkeit (v) zeigenden Kurvenverlauf aufweisen, der sich bei weiter fallendem Öffnungswinkel (β) wieder in Richtung steigender Fahrzeuggeschwindigkeit (v) ändert und so eine in Richtung niedrigerer Fahrzeuggeschwindigkeit (v) vorspringende, einen Meßabschnitt umschließende Ausprägung (4d, 4e, 4b) bildet, dadurch gekennzeichnet, daß nach Eintritt ( bei C) des fallenden, sich aus der augenblicklichen Fahrzeuggeschwindigkeit (v) und Drosselklappenstellung (β) ergebenden Betriebspunktes in den Meßabschnitt (4d, 4e, 4b) einer Hochschaltkennlinie (4) in der Getriebesteuereinheit eine Zeitspanne vorgegeben wird und daß ein Hochschaltsignal unterdrückt wird, wenn der Betriebspunkt am Ende der Zeitspanne den Meßabschnitt verlassen (bei D) hat.

2. Verfahren zum Ermitteln eines Schaltsignals für ein über eine elektronische Getriebesteuereinheit gesteuertes Automatikgetriebe in einem Kraftfahrzeug, das durch eine mit einem Fahrpedal beeinflußbaren Brennkraftmaschine angetrieben wird und bei dem ein die Stellung des Fahrpedals proportionales Fahrpedalsignal abgetastet und der Getriebesteuereinheit zugeführt wird, in der Hochschaltkennlinien eines Schaltkennfeldes als Kurven eines Fahrzeuggeschwindigkeit-Drosselklappenstellung-Diagramm abgelegt sind, wobei die Hochschaltkennlinien (1, 2, 3, 4) im Bereich niedrigerer Öffnungswinkel (β) der Drosselklappe einen in Richtung geringerer Fahrzeuggeschwindigkeit (v) zeigenden Kurvenverlauf aufweisen, der sich bei weiter fallendem Öffnungswinkel (β) wieder in Richtung steigender Fahrzeuggeschwindigkeit (v) ändert und so eine in Richtung niedrigerer Fahrzeuggeschwindigkeit (v) vorspringende, einen Meßabschnitt umschließende Ausprägung (4d, 4e, 4b) bildet, dadurch gekennzeichnet, daß die Fahrpedalsignale nach Eintritt (bei C) des fallenden, sich aus der augenblicklichen Fahrgeschwindigkeit und der Drosselklappenstellung ergebenden Betriebspunktes in den Meßabschnitt (4d, 4e, 4b) einer Hochschaltkennlinie (4) laufend in ein die momentane Fahrpedalgeschwindigkeit wiedergebenden Meßwert umgewandelt und durch einen Faktor dividiert werden, der sich aus dem Abstand der jeweiligen Lage des Betriebspunktes im Meßabschnitt (4d, 4e, 4b) zu seiner in der Getriebesteuereinheit errechneten Austrittsstelle (bei D) aus dem Meßabschnitt (4d, 4e, 4b) ergibt, und daß das Ergebnis der Division mit einem abgespeicherten Grenzwert verglichen und bei Überschreiten des Grenzwertes ein Schaltsignal zum Hochschalten abgegeben wird.

3. Verfahren nach einem der Ansprüche 1 oder 2, dadurch gekennzeichnet, daß die Querbeschleunigung des Fahrzeuges gemessen und das Meßsignal der Getriebesteuereinheit zugeführt wird und daß bei Überschreiten der Querbeschleunigung über ein vorgegebenes Maß eine Hochschaltung unterbleibt.

4. Verfahren nach einem der Ansprüche 1 bis 3, dadurch gekennzeichnet, daß das Lenkwinkelsignal als zusätzliches Kriterium für eine Hochschaltung der Getriebesteuereinheit zugeführt wird.

## Claims

1. A method of generating a shift signal for an automatic drive or gear unit controlled by an electronic control unit in a vehicle driven by an internal combustion engine, wherein upward-shifting characteristics (1, 2, 3, 4) in the form of curves in a graph of the vehicle speed and the throttle-valve position are shown in a shift map, the characteristics (1, 2, 3, 4) at smaller opening angles (β) of the throttle valve having a curve which points in the direction of lower speeds (v) and which, when the opening angle (β) decreases further, changes to the direction of increasing speeds (v) and thus forms a salient (4d, 4e, 4b) which projects in the direction of low speeds (v) and surrounds a measuring section, characterised in that, after entering (at C) the falling operating level, resulting from the instantaneous speed (v) and the throttle-valve motion (β), i.e. after entering the measuring portion (4d, 4e, 4b) of an upward-shifting characteristic (4), a period of time is preset in the gear control unit and an upward-shifting signal is suppressed if the operating point has left (at D) the measuring portion at the end of the period of time.

2. A method of generating a shift signal for an automatic gear unit controlled by an electronic control unit in a vehicle driven by an internal combustion engine influenced by an accelerator pedal and in which an accelerator-pedal signal proportional to the position of the accelerator pedal is scanned and supplied to the gear control unit, wherein upward-shifting characteristics of a shift map are stored in the form of curves in a graph of the vehicle speed and the throttle-valve position, the upward-shifting characteristics (1, 2, 3, 4), at smaller opening angles (β) of the throttle valve, having a curve which points in the direction of low speeds (v) and which, on further decrease of the opening angle (β), changes to the direction of increasing speeds (v) and thus forms a salient (4d, 4e, 4b) which projects in the direction of lower speeds (v) and surrounds a measuring portion, characterised in that the accelerator-pedal signals, after entering (at C) the falling operating level, resulting from the instantaneous speed and the throttle-valve position, i.e. entering the measuring portion (4d, 4e, 4b) of an upward-shifting characteristic (4), are continuously converted into a measured value reproducing the actual accelerator-pedal speed and are divided by a factor obtained from the difference between the instantaneous position of the operating level in the measuring portion (4d, 4e, 4b) and the place (at D) where it leaves the measuring portion (4d, 4e, 4b), as calculated in the gear control unit, and the result of division is compared with a stored limiting value and, if it exceeds the limiting value, a signal is given for a change to a higher gear.

3. A method according to claim 1 or 2, characterised in that the transverse acceleration of the vehicle is measured and the measured signal is supplied to the gear control unit and, when the transverse acceleration exceeds a preset amount, no change is made to a higher gear.

4. A method according to any of claims 1 to 3, characterised in that the steering-angle signal is supplied to the gear control unit as an additional criterion for change to a higher gear.

## Revendications

1. Procédé pour délivrer un signal de commutation pour une transmission automatique commandée par une unité de transmission électronique dans un véhicule automobile entraîné par un moteur à combustion interne, dans lequel les courbes caractéristiques (1, 2, 3, 4) de passage au rapport supérieur, constituant le réseau de courbes de la transmission sont des courbes d'un diagramme vitesse du véhicule/position du clapet d'étranglement des gaz, ces courbes présentant, dans la zone assez petite d'angles d'ouverture (β) du clapet d'étranglement une pente dans le sens des vitesses décroissantes et qui, au-delà d'une certaine réduction de l'angle (β), modifie son orientation pour aller dans le sens des vitesses croissantes (v), en dessinant ainsi une bosse (4d, 4e, 4b), dirigée vers les petites vitesses et délimitant une plage de mesure, caractérisé en ce que l'entrée (en C) du point de fonctionnement, en mouvement descendant, représentant la vitesse instantanée (v), et la position (β) du clapet d'étranglement des gaz, dans la plage de mesure (4d, 4e, 4b) fait naître, dans l'unité de commande de la transmission, un délai de durée donnée, le signal de passage à la vitesse supérieure n'ayant pas lieu si le point de fonctionnement est sorti de la plage de mesure, à la fin du délai.

2. Procédé pour délivrer un signal de commutation pour une transmission automatique commandée par une unité de transmission électronique équipant un véhicule automobile entraîné par un moteur à combustion interne commandé par une pédale d'accélérateur dont la position est repérée par un signal proportionnet adressé à l'unité de commande, dans lequel les caractéristiques (1, 2, 3, 4) de passage au rapport supérieur, constituant le réseau de courbes de changement de vitesse de la transmission sont des courbes d'un diagramme vitesse du véhicule/position du clapet d'étranglement des gaz, ces courbes présentant, dans la zone des T petits angles d'ouverture (β) du clapet une pente dans le sens des vitesses décroissantes et qui, au-delà d'une certaine réduction de l'angle (β) modifie son orientation pour aller dans le sens des vitesses croissantes, en dessinant ainsi une bosse (4d, 4e, 4b), dirigée vers les petites vitesses et délimitant une plage de mesure, caractérisé en ce que, après l'entrée (en C) du point de fonctionnement, en mouvement descendant, représentant la vitesse instantanée (v) et la position (β) du clapet d'étranglement des gaz, dans la plage de mesure (4d, 4e, 4b) d'une courbe caractéristique 4, les signaux de la pédale d'accélérateur sont transformés en continu en valeurs constituant des mesures de la vitesse instantanée de la pédale, et divisés par un facteur fonction de la distance entre la position instantanée du point de fonctionnement, à l'intérieur de la plage de mesure (4d, 4e, 4b) et la position du point de sortie (D) établie par calcul dans l'unité de commande de transmission, le résultat de cette division étant comparé à une valeur limite en mémoire, de sorte que le dépassement de cette limite entraîne la délivrance d'un signal de commutation à la vitesse supérieure.

3. Procédé selon les revendications 1 ou 2, caractérisé en ce que l'accélération transversale du véhicule est mesuré et le signal de mesure est transmis à l'unité de commande de transmission et que, par dépassement de l'accélération transversale, une commutation de la vitesse supérieure ne se produit plus par l'intermédiaire d'un signal de mesure préétabli;

4. Procédé selon une des revendications 1 à 3, caractéérisé en ce que le signal d'angle de braquage est transmis comme critère supplémentaire à l'unité de commande de transmission pour une commutation supérieure.
